# EUROPÄISCHE PATENTSCHRIFT

(11) **EP 3 387 286 B1**
(45) Veröffentlichungstag und Bekanntmachung des Hinweises auf die Patenterteilung: **08.01.2020**
(21) Anmeldenummer: 16805764.4
(22) Anmeldetag: 30.11.2016
(51) Int. Cl.: F16F 1/12, B60G 11/15, B60G 11/16, B60G 11/22, B60G 11/24

(54) **FEDERAUFLAGE FÜR EINE SCHRAUBENFEDER UND VERFAHREN ZUR HERSTELLUNG SOLCHER FEDERAUFLAGE**
SPRING SUPPORT FOR A HELICAL SPRING AND MANUFACTURING PROCESS OF SUCH A SPRING
BUTEE DE RESSORT POUR UN RESSORT HELICOIDAL ET PROCÉDÉ DE FABRICATION D'UNE TELLE BUTÉE

(30) Priorität: 10.12.2015 DE 102015224915
(43) Veröffentlichungstag der Anmeldung: 17.10.2018
(73) Patentinhaber: BASF SE, 67056 Ludwigshafen am Rhein (DE)
(72) Erfinder: MEIER, Waldemar, 49448 Lemfoerde (DE)
(86) Internationale Anmeldenummer: PCT/EP2016/079202
(87) Internationale Veröffentlichungsnummer: WO 2017/097647

(56) Entgegenhaltungen:
- EP-A1- 1 171 515
- EP-A1- 1 375 955
- EP-A2- 2 466 167
- DE-A1- 4 203 658
- DE-A1-102005 011 408
- DE-A1-102010 036 242
- DE-U1-202015 106 077

## Beschreibung

Die vorliegende Erfindung betrifft eine Federauflage für eine Schraubenfeder umfassend ein ringförmiges Aufnahmeelement mit einer Oberseite und einer Unterseite, wobei die Oberseite zur Aufnahme eines Endes der Schraubenfeder vorgesehen ist, sowie ein ringförmiges Dämpfungselement, das mit der Unterseite des Aufnahmeelements in Kontakt steht.

Gattungsgemäße Federauflagen werden unter anderem in Automobilen innerhalb des Fahrwerks verwendet und sind allgemein bekannt. Sie dienen dazu, innerhalb einer Radaufhängung eine Schraubenfeder zwischen der Karosserie des Fahrzeugs und seinen Fahrwerkskomponenten in der vorgesehenen Position zu halten. Neben der Fixierung der Schraubenfeder übernehmen Federauflagen üblicherweise auch die Aufgabe der Dämpfung oder Entkopplung von Schwingungen, die durch das Fahren über mehr oder minder raue Fahrbahnoberflächen erzeugt werden. Dabei soll auch sichergestellt werden, dass Schraubenfeder und Karosserieteile nicht direkt in Kontakt kommen. Im Zusammenspiel mit anderen Fahrwerkskomponenten kommt ihnen eine wesentliche Bedeutung bei der Abstimmung des Fahrzeugs im Hinblick auf Fahrkomfort und Fahrsicherheit zu.

Es sind unterschiedliche Arten von Federauflagen bekannt, sowohl im Hinblick auf ihre konstruktive Gestaltung als auch im Hinblick auf ihre Dämpfungseigenschaften. So offenbart das Dokument EP 0 778 166 A1 eine Federauflage, bei der auf der federabgewandten Seite ein flächiges Dämpfungselement vorgesehen ist, um Schwingungen von der Karosserie zu entkoppeln. Dagegen ist in der Offenlegungsschrift DE 10 2005 049 747 A1 eine Federauflage beschrieben, bei der sich das schwingungsdämpfende Bauteil auf der der Schraubenfeder zugewandten Seite befindet, sodass die Schraubenfeder sich darauf abstützt. Die US 5 918 812 A offenbart eine Sprinkleranlage, in der sternförmige Dämpfungselemente verbaut sind, die jedoch nicht umgebogen werden, um die Dämpfungseigenschaften der Dämpfung, insbesodere in radialer Richtung, zu verbessern. Weitere Dämpfungselemente, die jedoch nicht den vorteilhaft umgebogenen Kragen aufweisen werden in der DE 696 12 080 T2, DE 10 2009 056 351 A1, EP 0 036 994 A2 und EP1 375 955 A1 offenbart. Das Dokument DE 10 2005 011408 A1 offenbart den Oberbegriff des Anspruchs 1.

Den oben genannten Konzepten von Federauflagen ist gemein, dass sie bezogen auf die Ausrichtung der Schraubenfeder in erster Linie axial dämpfend wirken. Radiale bzw. seitliche Bewegungen der Schraubenfeder werden nur unzureichend berücksichtigt.

Es stellte sich die Aufgabe, Federauflagen mit verbesserten Dämpfungseigenschaften bereitzustellen, insbesondere im Hinblick auf radiale Schwingungsanteile der Schraubenfeder.

Diese Aufgabe wurde gelöst durch erfindungsgemäße Federauflagen, wie sie in Anspruch 1 angegeben sind. Die abhängigen Ansprüche 2 bis 6 sind auf weitere vorteilhafte Ausbildungen der Erfindung gerichtet. Weiterhin wird diese Aufgabe gelöst durch Verfahren zur Herstellung erfindungsgemäßer Federauflagen, wie sie in den Ansprüchen 7 bis 9 angegeben sind.

In einer ersten erfindungsgemäßen Ausgestaltung umfasst die Federauflage für eine Schraubenfeder ein ringförmiges Aufnahmeelement mit einer Oberseite und einer Unterseite, wobei die Oberseite zur Aufnahme eines Endes der Schraubenfeder vorgesehen ist. Weiterhin umfasst die Federauflage ein ringförmiges Dämpfungselement, das mit der Unterseite des Aufnahmeelements in Kontakt steht. Erfindungsgemäß weist das Dämpfungselement auf seiner Innenseite einen Kragen auf, der sich von der Unterseite des Aufnahmeelements in Richtung der Schraubenfeder erstreckt. Dieser Kragen ist durch Umbiegen aus einer scheibenförmigen Grundform des Dämpfungselements gebildet.

Bevorzugt ist die erfindungsgemäße Federauflage Teil eines Automobilfahrwerkes oder Teil der Kabinenaufhängung in einer bewegten Vorrichtung oder Teil einer Aufhängung für ein sich bewegten Teils, das bevorzugt ein Motor ist.

Ein weiterer Gegenstand der Erfindung ist ein Verfahren zur Herstellung einer Federauflage gemäß oben ausgeführter Ausgestaltung. In einem ersten Schritt wird ein scheibenförmiges Dämpfungselement in eine Gussform eingelegt. In einem nächsten Schritt wird ein ringförmiges Aufnahmeelement durch Angießen oder Anspritzen an das Dämpfungselement hergestellt, sodass die Unterseite des Aufnahmeelements mit dem ringförmigen Dämpfungselement in Kontakt steht.

In einem weiteren erfindungsgemäßen Verfahren wird in einem ersten Schritt ein scheibenförmiges Dämpfungselement in eine Gussform eingelegt. Die Gussform weist einen Kern auf, sodass die Innenseite des Dämpfungselements entlang des Kerns umgebogen wird, und das Dämpfungselement eine ringförmige Gestalt mit einem Kragen auf seiner Innenseite annimmt. In einem nächsten Schritt wird ein ringförmiges Aufnahmeelement durch Angießen oder Anspritzen an das Dämpfungselement hergestellt, sodass die Unterseite des Aufnahmeelements mit dem ringförmigen Dämpfungselement in Kontakt steht.

Der Kontakt zwischen Dämpfungselement und Aufnahmeelement kann auch auf andere Weise zustande kommen, beispielsweise durch Verkleben oder Verschweißen der Bauteile. Bevorzugt ist die Herstellung der Verbindung zwischen Dämpfungselement und Aufnahmeelement während der Herstellung des Aufnahmeelements gemäß den oben ausgeführten Verfahren, insbesondere wenn sich die Materialien von Dämpfungselement und Aufnahmeelement durch Angießen oder Anspritzen direkt verbinden lassen.

Bei einer bevorzugten Ausführungsform der erfindungsgemäßen Federauflage weist die scheibenförmige Grundform des Dämpfungselements sternförmige Einschnitte im Inneren auf. Dadurch wird ein Umbiegen der Abschnitte zwischen den Einschnitten erleichtert. Die Anzahl der Einschnitte sowie ihre Form und Dimensionierung wird im Einzelfall entsprechend den konkreten Anforderungen gewählt. Vorzugsweise sind fünf bis zwanzig Einschnitte in dem Dämpfungselement vorhanden. Die Einschnitte können bedarfsgerecht gestaltet sein, beispielsweise symmetrisch oder asymmetrisch, konzentrisch oder exzentrisch, je nach konkreten Anforderungen, z.B. aufgrund des Einbauraums für die Federauflage.

Die zur Aufnahme des Endes der Schraubenfeder vorgesehene Oberseite des Aufnahmeelements wird vorzugsweise der Form des Endes der Schraubenfeder angepasst, bei dem es sich beispielsweise um ein angelegtes Ende oder ein tangential auslaufendes Ende handeln kann.

Das Aufnahmeelement kann aus unterschiedlichen Materialien gefertigt sein. Bevorzugt wird zu seiner Herstellung ein thermoplastischer Kunststoff eingesetzt. Werkstoffe auf Basis von thermoplastischem Polyurethan (TPU), Polyethylen (PE) oder Polypropylen (PP) haben sich als besonders geeignet erwiesen, insbesondere aufgrund ihrer Materialeigenschaften hinsichtlich Steifigkeit und Flexibilität.

Je nach konkreten Anforderungen an die Federauflage, beispielsweise hinsichtlich der vorgegebenen Möglichkeiten zur Befestigung an der Karosserie oder an Fahrwerkskomponenten, kann es erforderlich oder günstig sein, die Federauflage um ein weiteres Bauteil zu ergänzen.

In einer vorteilhaften Weiterbildung der Erfindung umfasst die Federauflage weiterhin ein Bodenelement, das einen ringförmigen Anteil und einen rohrförmigen Anteil aufweist. Das Bodenelement steht mit seinem ringförmigen Anteil mit der der Schraubenfeder abgewandten Seite des Dämpfungselements in Kontakt, während der rohrförmige Anteil sich durch das Dämpfungselement hindurch in Richtung der Schraubenfeder erstreckt. Der Kragen des Dämpfungselements liegt an der äußeren Mantelfläche des rohrförmigen Anteils an.

Derartige Federauflagen können auf unterschiedliche Arten hergestellt werden. Bevorzugt ist ein Verfahren, bei dem das scheibenförmige Dämpfungselement auf das Bodenelement und das Aufnahmeelement auf das Dämpfungselement gelegt wird und anschließend das Aufnahmeelement in Richtung des Bodenelements gedrückt wird, sodass das Dämpfungselement zwischen den beiden anderen Elementen fixiert wird.

In einer weiteren erfindungsgemäßen Ausgestaltung umfasst die Federauflage für eine Schraubenfeder ein ringförmiges Aufnahmeelement mit einer Oberseite und einer Unterseite, wobei die Oberseite zur Aufnahme eines Endes der Schraubenfeder vorgesehen ist, sowie ein scheibenförmiges Dämpfungselement, das mit der Unterseite des Aufnahmeelements in Kontakt steht. Das Dämpfungselement weist im Inneren sternförmige Einschnitte auf.

Weiterhin ist bevorzugt, dass das Aufnahmeelement an seiner Oberseite mindestens ein Klemmelement zur Aufnahme eines Endes der Schraubenfeder aufweist. Es können mehrere einzelne Klemmelemente vorgesehen sein, das mindestens eine Klemmelement kann allerdings auch durchgängig umlaufend gestaltet sein. In einer besonders vorteilhaften Ausgestaltung sind zwei durchgängig umlaufende Klemmelemente vorhanden, wobei eines auf der in radialer Richtung äußeren Seite des Aufnahmeelements vorgesehen ist und das andere auf der in radialer Richtung inneren Seite. Insbesondere sind diese beiden Klemmelemente derart gestaltet, dass sie einen Hohlraum mit einer Öffnung bilden, durch die das Ende der Schraubenfeder in den Hohlraum gedrückt werden kann. Diese Ausführungsform der Klemmelemente hat zum einen den Vorteil, dass das Ende der Schraubenfeder sicher gehalten wird und zum anderen durch die großflächige Überdeckung die Oberfläche der Schraubenfeder in dem umfassten Bereich gegen schädliche Umwelteinflüsse wie Wasser oder Steinschlag geschützt ist.

In einer weiteren bevorzugten Ausgestaltet weist das Aufnahmeelement an seiner Oberseite mindestens ein Dichtelement auf, das sich radial von der Aufnahme für die Schraubenfeder nach innen erstreckt. Das Dichtelement ist vorzugsweise derart dimensioniert, dass es im eingebauten Zustand an einem dafür vorgesehenen Teil des Einbauraums, beispielsweise der Karosserie des Fahrzeugs, vollflächig anliegt und somit das sich darunter befindliche Dämpfungselement gegen schädliche Umwelteinflüsse schützt.

Weiterhin ist bevorzugt, dass das Aufnahmeelement an seiner Unterseite mindestens ein Dichtelement aufweist, das sich ausgehend vom unteren äußeren Rand des Grundkörpers des Aufnahmeelements 5 radial nach außen, nach unten oder sowohl nach außen als auch nach unten erstreckt. Das Dichtelement ist vorzugsweise derart dimensioniert, dass es im eingebauten Zustand vollflächig an der Auflagefläche des Federlagers, beispielsweise der Karosserie eines Fahrzeugs, anliegt und somit das Dämpfungselement gegen schädliche Umwelteinflüsse schützt.

Besonders bevorzugt weist das Aufnahmeelement sowohl an seiner Oberseite als auch an seiner Unterseite ein Dichtelement auf.

Das Dämpfungselement kann auf bekannten Materialien wie Gummi oder Polyisocyanat-Polyadditionsprodukten basieren.

In einer bevorzugten Ausführungsform basiert das Dämpfungselement auf Elastomeren auf der Basis von zelligen Polyisocyanat-Polyadditionsprodukten, besonders bevorzugt auf der Basis von zelligen Polyurethanelastomeren, die Polyharnstoffstrukturen enthalten können. Zellig bedeutet, dass die Zellen bevorzugt einen Durchmesser von 0,01 mm bis 0,5 mm, besonders bevorzugt von 0,01 mm bis 0,15 mm aufweisen.

Besonders bevorzugt haben die Polyisocyanat-Polyadditionsprodukte mindestens eine der folgenden Materialeigenschaften: eine Dichte nach DIN EN ISO 845 zwischen 270 und 900 kg/m3, eine Zugfestigkeit nach DIN EN ISO 1798 von ≥ 2,0 N/mm2, eine Bruchdehnung nach DIN EN ISO 1798 von ≥ 200 % oder eine Weiterreißfestigkeit nach DIN ISO 34-1 B (b) von ≥ 8 N/mm. In weiter bevorzugten Ausführungsformen besitzt ein Polyisocyanat-Polyadditionsprodukt zwei, weiter bevorzugt drei dieser Materialeigenschaften, besonders bevorzugte Ausführungsformen besitzen alle vier der genannten Materialeigenschaften.

Elastomere auf der Basis von Polyisocyanat-Polyadditionsprodukten und ihre Herstellung sind allgemein bekannt und vielfältig beschreiben, beispielsweise in EP 62 835 A1, EP 36 994 A2, EP 250 969 A1, EP 1 171 515 A1, DE 195 48 770 A1 und DE 195 48 771 A1.

Die Herstellung des scheibenförmigen Dämpfungselements kann auf unterschiedliche Arten erfolgen. Bevorzugt ist ein Verfahren, bei dem zunächst ein Block oder Schlauch hergestellt wird und anschließend aus diesem Block oder Schlauch Scheiben geschnitten werden. Dies ermöglicht eine rationelle und kostengünstige Fertigung der Dämpfungselemente.

Besonders bevorzugt ist zur Herstellung des scheibenförmigen Dämpfungselements ein Verfahren, bei dem zunächst ein Schlauch hergestellt wird, der im Inneren bereits die sternförmige Aussparung aufweist. Anschließend werden aus diesem Schlauch Scheiben geschnitten. Bei der Verwendung von zelligen Polyisocyanat-Polyadditionsprodukten als Material für das Dämpfungselement wird vorzugsweise ein innerer Kern im Werkzeug zur Herstellung des geschäumten Schlauches vorgesehen, der dem Negativ der sternförmigen Einschnitte entspricht.

Gegenüber aus dem Stand der Technik bekannten Federauflagen weisen die erfindungsgemäßen Federauflagen den Vorteil auf, dass auch radiale bzw. seitliche Bewegungen der Schraubenfeder zuverlässig gedämpft oder komplett entkoppelt werden. Dies trägt zu einer Verminderung der Geräuschübertragung auf die Karosserie bei und erhöht den Fahrkomfort. Gegenüber Federauflagen des Stands der Technik, bei denen die Schraubenfeder direkt mit dem Dämpfungselement in Kontakt steht und eine Punkt- oder Linienlast auf das Dämpfungselement erzeugt, hat die erfindungsgemäße Federauflage den Vorteil, dass über das Aufnahmeelement eine - im Wesentlichen gleichmäßige - Flächenlast auf das Dämpfungselement übertragen wird. Dadurch wird einer vorzeitigen punktuellen Schädigung des Dämpfungselements vorgebeugt. Weiterhin zeichnen sich die erfindungsgemäßen Federauflagen dadurch aus, dass sie einfach und kostengünstig zu fertigen sind.

### Beispiel

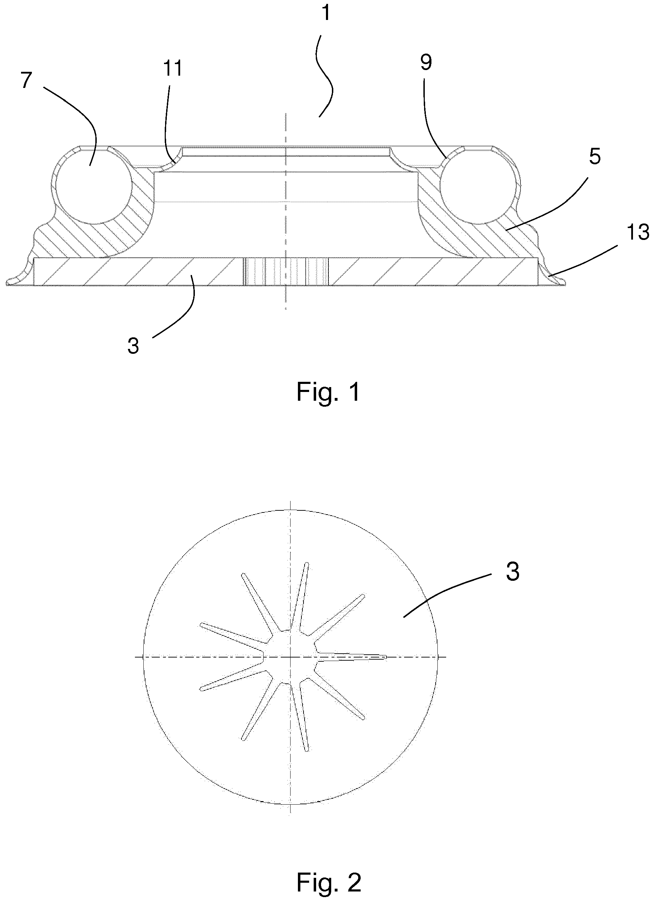

In Fig. 1 ist eine Ausführungsform einer erfindungsgemäßen Federauflage 1 im Längsschnitt dargestellt. Das Bauteil in diesem Beispiel ist rotationssymmetrisch um die strichpunktiert dargestellte Achse gestaltet. Die Federauflage 1 umfasst ein ringförmiges Aufnahmeelement 5 auf der Basis eines thermoplastischen Kunststoffs. In einer Ausführung wurde ein Werkstoff auf Basis eines thermoplastischen Polyurethans (Handelsname "Elastollan®" des Herstellers BASF Polyurethanes GmbH, Lemförde) eingesetzt, in einer anderen Ausführung ein Werkstoff auf Basis von Polyethylen. Das Aufnahmeelement 5 weist eine Oberseite und eine Unterseite auf. Die Oberseite ist zur Aufnahme eines Endes einer Schraubenfeder vorgesehen. In diesem Beispiel ist der zur Aufnahme der Feder vorgesehene Bereich 7 als ringförmiger Hohlraum gestaltet, der durch Klemmelemente 9 gebildet wird. Die Klemmelemente 9 sind einstückig mit dem Grundkörper des Aufnahmeelements 5 verbunden und weisen an ihrem oberen Ende einen Abstand auf, durch den die Schraubenfeder in den Hohlraum 7 gedrückt werden kann.

Die Unterseite des Aufnahmeelements 5 steht mit einem scheibenförmigen Dämpfungselement 3 in Kontakt, das im Inneren sternförmige Einschnitte aufweist. Das Dämpfungselement 3 wurde dadurch hergestellt, dass zunächst ein Schlauch aus zelligem Polyisocyanat-Polyadditionsprodukt (Handelsname "Cellasto®" des Herstellers BASF Polyurethanes GmbH, Lemförde) geschäumt wurde, bei dem im Inneren des Werkzeugs ein sternförmiger Kern vorhanden war, sodass der entformte Schlauch bereits sternförmige Einschnitte aufwies. Der Schlauch wurde auf eine Drehbank gespannt und ein einzelnes Dämpfungselement 3 von dem aufgespannten Schlauch abgeschnitten. Das einzelne Dämpfungselement 3 ist in Fig. 2 in der Draufsicht dargestellt. Die sternförmigen Einschnitte umfassen eine konzentrische Aussparung sowie neun davon in gleichem Abstand in radialer Richtung zum Rand verlaufende Schlitze. Das scheibenförmige Dämpfungselement 3 wurde in eine Gussform gelegt, und anschließend das dargestellte Aufnahmeelement durch Anspritzen an das Dämpfungselement 3 hergestellt.

Das Aufnahmeelement 5 umfasst weiterhin ein umlaufendes Dichtelement 11 an seiner Oberseite, das sich radial von dem zur Aufnahme der Schraubenfeder vorgesehenen Bereich 7 nach innen erstreckt. Weiterhin umfasst das Aufnahmeelement 5 ein Dichtelement 13 an seiner Unterseite, das sich ausgehend vom unteren äußeren Rand des Grundkörpers des Aufnahmeelements 5 radial nach außen und nach unten erstreckt.

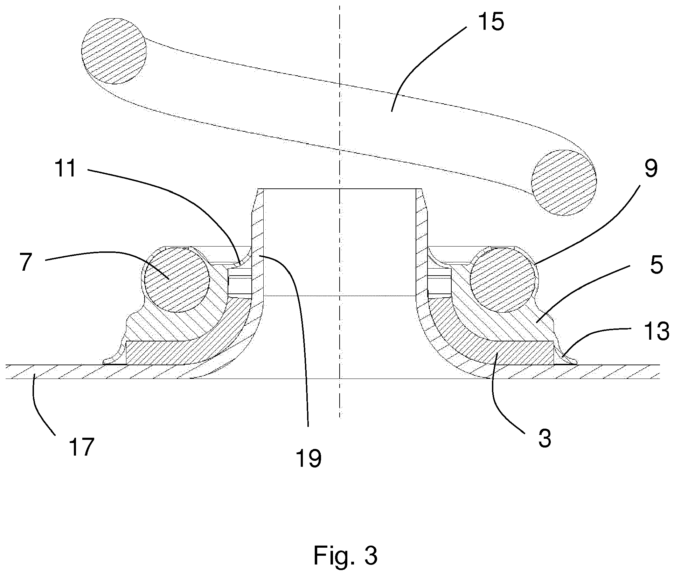

Fig. 3 zeigt die erfindungsgemäße Ausführungsform nach Fig. 1 im eingebauten Zustand. Die Federauflage ist auf einen Bereich der Karosserie 17 eines Fahrzeugs montiert, der einen rohrförmigen Fortsatz 19 aufweist. Zur Montage wurde die Federauflage auf den Fortsatz 19 gedrückt, wodurch sich das ursprünglich scheibenförmige Dämpfungselement 3 zu einem Kragen umgebogen hat, der sich von der Unterseite des Aufnahmeelements 5 in Richtung der Schraubenfeder 15 erstreckt. Eine Schraubenfeder 15 mit einem angelegten Ende wurde mit selbigem Ende in den zur Aufnahme vorgesehene Hohlraum 7 des Aufnahmeelements 5 gesteckt und durch die Klemmelemente 9 befestigt, die die letzte Federwindung großflächig umschließen.

Das Dichtelement 11 an der Oberseite des Aufnahmeelements 5 ist so bemessen, dass es im eingebauten Zustand vollflächig umlaufend an dem Fortsatz 19 der Karosserie anliegt. Das Dichtelement 13 an der Unterseite des Aufnahmeelements 5 ist so bemessen, dass es im eingebauten Zustand vollflächig umlaufend an der Oberfläche der Karosserie 17 anliegt. Die beiden Dichtelemente 11 und 13 bewirken, dass das Dämpfungselement 3 gegen äußere Einflüsse wie Feuchtigkeit und Schmutz geschützt ist, wodurch dessen Funktionsfähigkeit und Lebensdauer verlängert wird.

Während der Bewegung des Fahrzeugs wird die Schraubenfeder 15 sowohl in axialer als auch in radialer bzw. seitlicher Richtung belastet und zu Schwingungen angeregt. Durch die erfindungsgemäße Federauflage werden sämtliche Schwingungsanteile gedämpft, wodurch gegenüber dem Stand der Technik ein besseres Dämpfungsverhalten erreicht wird.

## Patentansprüche

1. Federauflage für eine Schraubenfeder (15) umfassend ein ringförmiges Aufnahmeelement (5) mit einer Oberseite und einer Unterseite, wobei die Oberseite zur Aufnahme eines Endes der Schraubenfeder (15) vorgesehen ist, sowie ein ringförmiges Dämpfungselement (3), das mit der Unterseite des Aufnahmeelements (5) in Kontakt steht,
**dadurch gekennzeichnet, dass** das Dämpfungselement (3) eine scheibenförmige Grundform aufweist, und weiterhin dazu eingerichtet ist, bei einer Montage der Federauflage durch Umbiegen aus der scheibenförmigen Grundform auf seiner Innenseite einen Kragen zu bilden, der sich von der Unterseite des Aufnahmeelements (5) in Richtung der Schraubenfeder (15) erstreckt.

2. Federauflage nach Anspruch 1, wobei die scheibenförmige Grundform des Dämpfungselements (3) sternförmige Einschnitte im Inneren aufweist.

3. Federauflage nach Anspruch 1 oder 2, wobei das Aufnahmeelement (5) an seiner Oberseite mindestens ein Klemmelement (9) zur Aufnahme eines Endes der Schraubenfeder (15) aufweist.

4. Federauflagen nach einem der Ansprüche 1 bis 3, wobei das Aufnahmeelement an seiner Oberseite mindestens ein Dichtelement (11) aufweist, das sich radial von der Aufnahme (7) für die Schraubenfeder (15) nach innen erstreckt.

5. Federauflage nach einem der Ansprüche 1 bis 5, wobei das Dämpfungselement (3) auf einem zelligen Polyisocyanat-Polyadditionsprodukt basiert.

6. Federauflage nach einem der vorstehenden Ansprüche,
wobei das Aufnahmeelement aus einem thermoplastischen Kunststoff hergestellt ist, vorzugsweise aus einem Werkstoff auf Basis von thermoplastischem Polyurethan (TPU), Polyethylen (PE) oder Polypropylen (PP).

7. Verfahren zur Herstellung einer Federauflage für eine Schraubenfeder (15) nach einem der vorhergehenden Ansprüche, umfassend die folgenden Schritte
Einlegen eines scheibenförmigen Dämpfungselements (3) in eine Gussform,; und
Herstellen eines ringförmigen Aufnahmeelements (5) durch Verkleben, Verschweißen, Angießen oder Anspritzen an das Dämpfungselement (3), sodass die Unterseite des Aufnahmeelements (5) mit dem ringförmigen Dämpfungselement (3) in Kontakt steht.

8. Verfahren nach Anspruch 7,
umfassend die Schritte:
- Herstellen eines Blocks oder Schlauchs, und anschließend
- Schneiden des Dämpfungselements als Scheibe von dem Block oder Schlauch.

9. Verfahren nach Anspruch 8,
wobei das scheibenförmige Dämpfungselement von einem Schlauch abgeschnitten wird, und wobei das Verfahren vor dem Schneiden ferner den Schritt umfasst:
Herstellen eines Schlauchs, der im Inneren eine sternförmige Ausnehmung aufweist.

## Claims

1. A spring support for a coil spring (15), comprising an annular receiving element (5) having a top side and a bottom side, wherein the top side is provided to receive one end of the coil spring (15), and comprising an annular damping element (3), which is in contact with the bottom side of the receiving element (5),
wherein the damping element (3) has a disk-shaped basic form, and furthermore is configured, during mounting of the spring support, by bending from the disk-shaped basic form, to form on its inside a collar which extends from the bottom side of the receiving element (5) in the direction of the coil spring (15).

2. The spring support as claimed in claim 1, wherein the disk-shaped basic form of the damping element (3) has star-shaped notches on the inside.

3. The spring support as claimed in claim 1 or 2, wherein the receiving element (5) has on its top side at least one clamping element (9) for receiving one end of the coil spring (15).

4. The spring supports, as claimed in one of claims 1 to 3, wherein the receiving element has on its top side at least one sealing element (11), which extends radially inward from the receptacle (7) for the coil spring (15).

5. The spring support as claimed in one of claims 1 to 5, wherein the damping element (3) is based on a cellular polyisocyanate-polyaddition product.

6. The spring support as claimed in one of the preceding claims,
wherein the receiving element is produced from a thermoplastic, preferably from a material on the basis of thermoplastic polyurethane (TPU), polyethylene (PE) or polypropylene (PP).

7. A method for producing a spring support for a coil spring (15) as claimed in one of the preceding claims, comprising the following steps:
placing a disk-shaped damping element (3) in a casting mold; and
production of an annular receiving element (5) by being adhesively bonded, welded, molded or injection-molded to the damping element (3), with the result that the bottom side of the receiving element (5) is in contact with the annular damping element (3).

8. The method as claimed in claim 7,
comprising the following steps:
- production of a block or tube, and then
- cutting the damping element as a disk from the block or tube.

9. The method as claimed in claim 8,
wherein the disk-shaped damping element is cut from a tube, and wherein the method, prior to the cutting, furthermore comprises the following step:
production of a tube which has a star-shaped recess on the inside.

## Revendications

1. Butée de ressort pour un ressort hélicoïdal (15), comprenant un élément de réception de forme annulaire (5) avec un côté supérieur et un côté inférieur, le côté supérieur étant prévu pour recevoir une extrémité du ressort hélicoïdal (15), ainsi qu'un élément d'amortissement de forme annulaire (3) qui est en contact avec le côté inférieur de l'élément de réception (5), **caractérisée en ce que** l'élément d'amortissement (3) présente une forme de base en forme de disque et est en outre prévu pour former sur son côté intérieur, lors d'un montage de la butée de ressort, par cintrage à partir de la forme de base en forme de disque, un collet qui s'étend depuis le côté inférieur de l'élément de réception (5) dans la direction du ressort hélicoïdal (15).

2. Butée de ressort selon la revendication 1, dans laquelle la forme de base en forme de disque de l'élément d'amortissement (3) présente à l'intérieur des entailles en forme d'étoile.

3. Butée de ressort selon la revendication 1 ou 2, dans laquelle l'élément de réception (5) présente au niveau de son côté supérieur au moins un élément de serrage (9) pour recevoir une extrémité du ressort hélicoïdal (15).

4. Butées de ressort selon l'une quelconque des revendications 1 à 3, dans laquelle l'élément de réception présente, au niveau de son côté supérieur, au moins un élément d'étanchéité (11) qui s'étend vers l'intérieur radialement depuis le logement (7) pour le ressort hélicoïdal (15).

5. Butée de ressort selon l'une quelconque des revendications 1 à 5, dans laquelle l'élément d'amortissement (3) est à base d'un produit de polyaddition de polyisocyanate cellulaire.

6. Butée de ressort selon l'une quelconque des revendications précédentes, dans laquelle l'élément de réception est fabriqué à partir d'un plastique thermoplastique, de préférence à partir d'un matériau à base de polyuréthane thermoplastique (TPU), de polyéthylène (PE) ou de polypropylène (PP).

7. Procédé de fabrication d'une butée de ressort pour un ressort hélicoïdal (15) selon l'une quelconque des revendications précédentes, comprenant les étapes suivantes :
insertion d'un élément d'amortissement en forme de disque (3) dans un moule de coulée ; et
fabrication d'un élément de réception de forme annulaire (5) par collage, soudage, surmoulage ou moulage par pulvérisation sur l'élément d'amortissement (3) de telle sorte que le côté inférieur de l'élément de réception (5) soit en contact avec l'élément d'amortissement de forme annulaire (3).

8. Procédé selon la revendication 7, comprenant les étapes suivantes :
- fabrication d'un bloc ou d'un tuyau souple, puis
- découpe de l'élément d'amortissement sous forme de disque à partir du bloc ou du tuyau souple.

9. Procédé selon la revendication 8,
dans lequel l'élément d'amortissement en forme de disque est découpé à partir d'un tuyau souple, et le procédé comprenant en outre l'étape avant la découpe :
de fabrication d'un tuyau souple qui présente à l'intérieur un évidement en forme d'étoile.
